# EUROPEAN PATENT APPLICATION

(11) **EP 2 472 706 A1**
(43) Date of publication of application: **04.07.2012**
(21) Application number: 10839861.1
(22) Date of filing: 05.03.2010
(51) Int. Cl.: H02K 21/24, H02K 3/04, H02K 16/02

(54) **ELECTROMAGNETIC GENERATOR**

(30) Priority: 25.12.2009 RU 2009149844
(71) Applicant: Esakov, Sergej Mikhailovich, St.Petersburg 198510 (RU); Esakov, Mikhail Sergeevich, St.Petersburg 191144 (RU)
(72) Inventor: ESAKOV, Segej Mikhailovich, St.Petersburg 198510 (RU); ESAKOV, Mikhail Sergeevich, St.Petersburg 191144 (RU); VELIKO-IVANENKO, Anatolij Yurievich, St.Petersburg 198328 (RU)
(74) Representative: Gulde Hengelhaupt Ziebig & Schneider
(86) International application number: PCT/RU2010/000104
(87) International publication number: WO 2011/078729

(57) **Abstract**

The invention relates to the field of electrical engineering, specifically to low-speed electrical generators, and can be used in particular in wind energy installations. In an electromagnetic generator having a rotor equipped with permanent magnets 3 and 4 and a stator comprising two parallel laminates 5 and 6 with ring windings 7 arranged therebetween, the rotor is formed from two parallel disks 1 and 2 fixed to a shaft, with annular rows of permanent magnets 3 and 4 arranged on each of said disks on the mutually facing surfaces, said permanent magnets being arranged equidistantly in each row, and the polarity of the permanent magnets in each row alternating, wherein the poles of the permanent magnets in one row are turned towards the opposite poles of the permanent magnets in the other row, and the ring windings 7 of the stator are in the form of isosceles trapezoids with lateral sides 8 and 9 that are arranged radially relative to the axis of rotation of the rotor, also sections 11 and 12 of the ring windings 7 in the bases of the trapezoids have a convex curvature in the form of an arch, and the ring windings 7 are inserted one inside the other in pairs, wherein the distance I between the sections 11 and 12 of the ring windings 7 in the bases of the trapezoids exceeds the width b of the annular row of permanent magnets. The invention increases the efficiency of the generator and reduces the starting torque and the noise level during operation.

## Description

### Technical field

The invention relates to the field of electrical engineering, specifically to low-speed electrical generators, and can be used in particular in wind energy installations.

### Background art

A low-speed electromagnetic generator, which contains an annular row of stator windings on iron cores made of iron sheets or compressed iron powder and a matching annular row of permanent rotor magnets, is known in the prior art, in particular a synchronous machine with permanent magnetization for sinusoidal voltage, wherein the windings are concentrated instead of being distributed in the slots, the cores with windings are alternated with iron cores without windings so that every second iron core has a winding, the number of gaps between the cores is different from the number of poles, wherein the number s of gaps between the cores and the number p of poles correspond to the formulas |s-p| = 2•m and s = 12•n•m, where n and m are positive integers, and wherein the machine is designed for three-phase voltage with series connection of adjacent coils in order to obtain •m such groups per phase that can be connected either in series or in parallel, see RU 2234788 C2.

The disadvantage of said generator consists in its low efficiency: the windings in the annular row are positioned at a great distance from each other and no electromotive force is induced therein at the moment when the magnets are located in the gap between the windings.

Another known electromagnetic generator has a rotor equipped with permanent magnets and a stator having two parallel laminates in the form of interconnected disks with windings arranged therebetween; the stator has magnetic cores in the form of flat rings, see RU 2168062.

This engineering solution was taken as a prototype of the present invention; it has the same disadvantage as the abovementioned analogous solution (see RU 2234788 C2), namely its low efficiency, which is caused by the same problem. In addition, when the permanent magnets of the rotor pass over the cores of stator windings, the permanent magnets and the cores of stator windings become attracted to each other (the so-called rotor sticking effect), hindering the start of the generator and producing intense noise during its operation.

It is an object of the present invention to increase the efficiency of the generator and reduce the starting torque and the noise level during operation.

### Summary of the invention

According to the invention, in an electromagnetic generator having a rotor equipped with permanent magnets and a stator comprising two parallel laminates with ring windings arranged therebetween, the rotor is formed from two parallel disks fixed to a shaft, with annular rows of permanent magnets arranged on each of said disks on the mutually facing surfaces, said permanent magnets being arranged equidistantly in each row, and the polarity of the permanent magnets in each row alternating, wherein the poles of the permanent magnets in one row are turned towards the opposite poles of the permanent magnets in the other row, and the ring windings of the stator are in the form of isosceles trapezoids with lateral sides that are arranged radially relative to the axis of rotation of the rotor, also sections of the ring windings in the bases of the trapezoids have a convex curvature in the form of an arch, and the ring windings are inserted one inside the other in pairs, wherein the distance I between the sections of the ring windings in the bases of the trapezoids exceeds the width b of the annular row of permanent magnets.

The applicant has not found any sources of information containing data on engineering solutions identical to the present invention, which enables to conclude that the invention conforms to the criterion "Novelty" (N).

Implementation of the features of the invention provides a novel technical result: the annular gap between the moving magnets of the rotor is filled by the winding turns in a more uniform way, which increases the efficiency of the generator by virtually eliminating the pauses in the electromotive force induction that are present in the prototype.

The applicant has not found any sources of information containing data on the influence of the features of the invention on the technical result produced by the invention, which enables to conclude that the invention conforms to the criterion "Inventive Step" (IS).

### Brief description of the drawings

The essence of the invention is explained further with reference to the accompanying drawings, in which:
- Figure 1 --: side view;
- Figure 2 -: A-A section of Figure 1;
- Figure 3 -: adjacent annular windings coupled with each other, shown as an axonometric projection;
- Figure 4 -: same as Figure 3, plan view;
- Figure 5 -: B-B section of Figure 4.

### Preferred embodiment

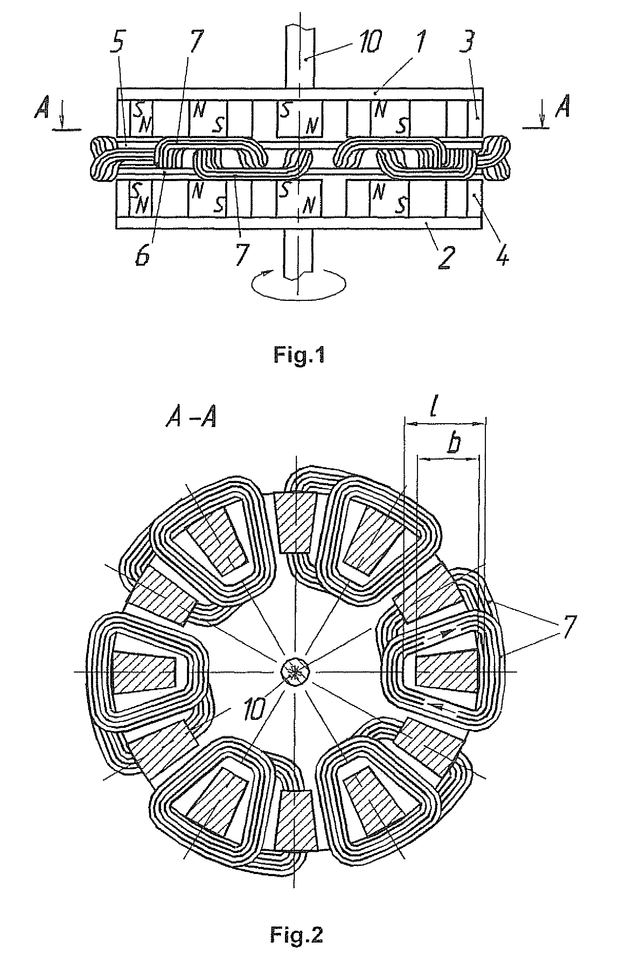

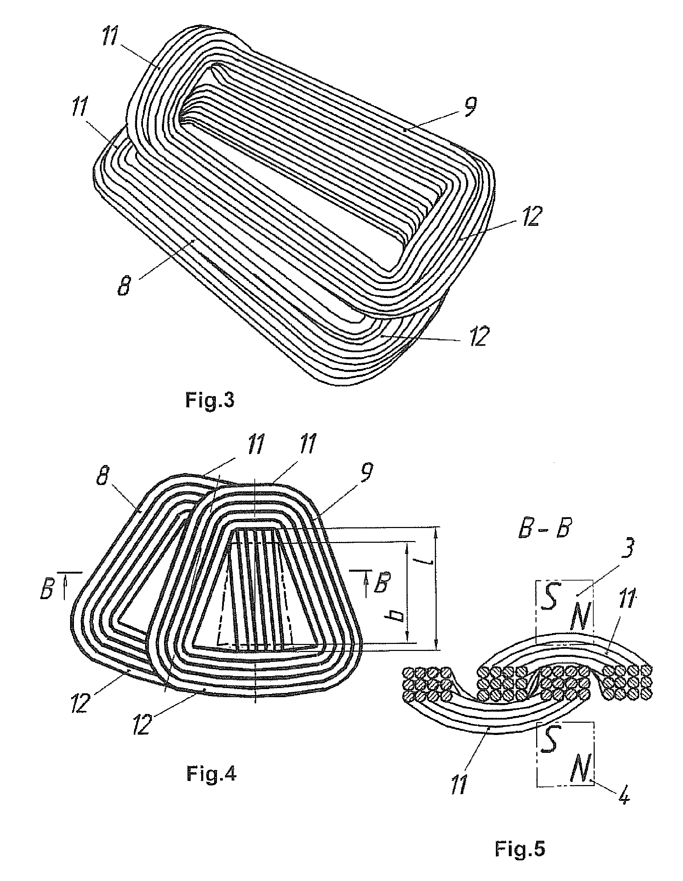

The rotor of the electromagnetic generator is formed from two parallel disks 1 and 2 fixes to a shaft 10. In this particular embodiment the disks 1 and 2 are made of electrical steel. Annular rows of permanent magnets 3 and 4 are arranged on the mutually facing surfaces of said disks 1 and 2, respectively. In each annular row the magnets 3 and 4 are arranged equidistantly relative to each other. The polarity of permanent magnets alternates in each row, and the poles of the permanent magnets in one row are turned towards the opposite poles of the permanent magnets in the other row (see Figure 1). The stator of the electromagnetic generator comprises two parallel laminates 5 and 6 with ring windings 7 in the form of isosceles trapezoids arranged therebetween. The lateral sides 8 and 9 of the trapezoids are arranged radially relative to the longitudinal axis of rotation of the rotor, and the sections 11 and 12 of the windings 7 in the bases of the trapezoids have a convex curvature in the form of an arch (see Figure 5). Windings 7 are coupled with each other in pairs by being inserted one inside the other (see Figure 3), wherein the distance I between the sections 11 and 12 of the ring windings 7 exceeds the width b of the annular row of permanent magnets (see Figure 4). The upper-located windings 7 are fixed to the laminate 5 and the lower windings 7 are fixed to the laminate 6.

The electromagnetic generator functions in the following way. When the rotor with the shaft 10 rotate, the magnetic field lines of the permanent magnets 3 and 4 cross the turns of the annular windings 7 and induce electromotive force in the windings 7. Since the lateral sides 8 and 9 of the annular windings 7 are positioned between the poles of magnets with different polarity, differently directed electromotive force is induced in the lateral sides 8 and 9 of the windings 7 (see arrows in Figure 2). Thus there is a ring current flowing in each winding 7. The windings that are fixed to the laminate 5 are interconnected, and the windings that are fixed to the laminate 6 are interconnected as well.

Since the conductors of the windings 7 uniformly fill the annular gap between the moving magnets 3 and 4 (see Figure 5), creating a uniform medium for the moving magnets, the described construction has no rotor sticking problems, which ultimately ensures quiet and smooth operation of the generator.

### Industrial applicability

The inventive device can be manufactured by means of common constructional materials and factory equipment. In applicant's opinion, this enables to conclude that the invention conforms to the criterion "Industrial Applicability" (IA).

## Claims

1. An electromagnetic generator having a rotor equipped with permanent magnets and a stator comprising two parallel laminates with ring windings arranged therebetween, **characterized in that** the rotor is formed from two parallel disks fixed to a shaft, with annular rows of permanent magnets arranged on each of said disks on the mutually facing surfaces, said permanent magnets being arranged equidistantly in each row, and the polarity of the permanent magnets in each row alternating, wherein the poles of the permanent magnets in one row are turned towards the opposite poles of the permanent magnets in the other row, and the ring windings of the stator are in the form of isosceles trapezoids with lateral sides that are arranged radially relative to the axis of rotation of the rotor, also sections of the ring windings in the bases of the trapezoids have a convex curvature in the form of an arch, and the ring windings are inserted one inside the other in pairs, wherein the distance I between the sections of the ring windings in the bases of the trapezoids exceeds the width b of the annular row of permanent magnets.
